# EUROPÄISCHE PATENTANMELDUNG

(11) **EP 2 535 839 A1**
(43) Veröffentlichungstag der Anmeldung: **19.12.2012**
(21) Anmeldenummer: 11170233.8
(22) Anmeldetag: 16.06.2011
(51) Int. Cl.: G06K 7/08, G06F 21/00

(54) **Eingabemittel für einen Berührungsbildschirm**

(71) Anmelder: Printechnologics GmbH, 09112 Chemnitz (DE)
(72) Erfinder: Kreutzer, André, 09648 Mittweida (DE); Hofmann, Sven, 04279 Leipzig (DE)
(74) Vertreter: Lange, Sven

(57) **Zusammenfassung**

Die Erfindung betrifft ein Eingabemittel, welches mindestens ein elektrisch nicht leitfähiges Substrat, eine auf dem Substrat vorliegende elektrisch leitfähige Fläche, eine elektrische Leiterbahn, eine Kontrolleinheit zur elektrischen Verschaltung der Flächen und eine Energiequelle umfasst, wobei mindestens eine elektrisch leitfähige Fläche über mindestens eine Leiterbahn mit der Kontrolleinheit elektrisch verbunden ist. Weiterhin betrifft die Erfindung ein System umfassend das Eingabemittel und einen Berührungsbildschirm. Außerdem betrifft die Erfindung ein Verfahren zur Eingabe von Daten an einem Berührungsbildschirm und die Verwendung des Eingabemittels zur Authentifizierung, Autorisierung und/oder Dateneingabe.

## Beschreibung

Die Erfindung betrifft ein Eingabmittel, umfassend ein elektrisch nicht leitfähiges Substrat, eine auf dem Substrat vorliegende elektrisch leitfähige Fläche, eine elektrische Leiterbahn, eine Kontrolleinheit zur elektrischen Verschaltung von den elektrischen Flächen und eine Energiequelle. Weiterhin betrifft die Erfindung ein System bestehend aus einem Eingabemittel und einem Berührungsbildschirm.

Um Daten oder elektrische Geräte vor einem nicht autorisierten Zugriff zu sichern, sind im Stand der Technik zahlreiche Verfahren und Techniken beschrieben. Beispielsweise kann der Zugang zu einem Personalcomputer mit einem Kennwort restringiert werden, um wichtige Daten zu schützen oder zu verhindern, dass der Computer von unbefugten Personen verwendet wird. Diese Kennwörter werden in Verbindung mit Verschlüsselungs-und Identifikationsüberprüfungschlüsseln verwendet, die benutzt werden, um eine sichere Nachrichtenübermittlung zwischen Computern einzuführen. Es ist heute möglich, ein Programm auf dem Computer zu installieren, das empfindliche Daten verschlüsselt, sodass diese Daten nicht von irgendjemandem gelesen werden können, der den Schlüssel für die Entsperrung nicht besitzt. Es ist aber notwendig, den Schlüssel irgendwo aufzubewahren, und wenn dieser Schlüssel nicht komplex ist, wird er gefunden werden.

Trotz der konstanten Entwicklung von neuen Techniken sind Kennwörter immer noch die am häufigsten gebräuchlichen Sicherheitswerkzeuge; sie sind auch die am meisten missbrauchten und häufig die am Leichtesten zu brechenden für einen Nichtberechtigten. Kennwörter stellen eine Art von Sicherheitsparadox dar. Die besten Kennwörter sind die am schwierigsten zu erratenden: lang und zufällig. Leider sind diese auch die Schwierigsten, um sich daran zu erinnern. Außerdem empfehlen die meisten Experten nachdrücklich, verschiedene Kennwörter für jeden E-Mail-, E-Commerce- oder anderen Account zu verwenden und dass diese regelmäßig geändert werden sollen. Als Ergebnis wählen die meisten Personen entweder leicht erratbare Kennwörter oder schreiben sie auf, von wo sie kopiert oder gestohlen werden können.

Der Durchschnittsverbraucher benutzt somit mehrere vorzugsweise unterschiedliche Passwörter oder Kennwörter. Im Stand der Technik sind spezielle Programme beschrieben, die Kennwörter speichern und verwalten. Diese Programme stellen einen Bereich zur Verfügung, um lange, komplexe oder zufällige Kennwörter zu speichern und verschlüsseln sie dann, sodass sie nicht gestohlen werden können. Einige dieser sogenannten Kennworttresore erzeugen sogar zufällige Kennwörter für den Anwender. Aber sie befinden sich häufig auf der persönlichen Festplatte und benötigen ebenfalls ein Kennwort, um die Software zu aktivieren. Nachteilig hierbei ist jedoch, dass sich ein Hacker auch Zugang zu dem Programm bzw. dem Speicherort der Kennwörter verschaffen kann.

Weiterhin ist im Stand der Technik offenbart, dass portable Datenträger mit einem Chip ausgestattet werden können und auf diesen datenträger- oder personenindividuelle Daten speicherbar sind. Jedoch ist das Einschreiben der Daten nur über eine geeignete Datenkommunikationsverbindung von einer außerhalb des Datenträgers befindlichen Schreibeinrichtung zu dem eingebetteten Chip möglich. In diesem Zusammenhang ist es bekannt, an der Außenseite von portablen Datenträgern Kontaktflächen bereitzustellen, über die datenträger- oder personenindividuelle Daten (z. B. Personalisierungsdaten) in den Chip des Datenträgers eingeschrieben werden können. Derartige datenträgerindividuelle oder personenindividuelle Daten betreffen individualisierende Daten einer Person oder einer Datenträgerkonfiguration oder dergleichen, die nicht bereits bei der Initialisierung des Datenträgers eingespielt werden können, da sie insbesondere keine für eine Vielzahl von Datenträgern geeigneten datenträger und/ oder personenunabhängige Daten sind. Dazu werden die datenträger- oder personenindividuellen Daten über ein Kontaktfeld des Datenträgers in den vollständig in ein Kunststoffsubstrat eingebetteten (bereits initialisierten) Chip eingeschrieben.

Derartige Kontaktfelder sind optisch auffällig und schaffen über die gesamte Lebensdauer des Datenträgers einen prinzipiellen Zugang zu den sensiblen Daten im Chip, der für Manipulationen und Ausspähungen ausgenutzt werden könnte. Darüber hinaus reduzieren sie die Lebensdauer des Chips, da äußere Einflüsse wie z. B. Spannungen direkt in den Chip gelangen können. Ebenso ergibt sich die Schwierigkeit, dass derartige elektronisch personalisierte, d. h. mit Personalisierungsdaten versehene Datenträger nachfolgend nicht ohne weiteres einer optischen Personalisierung - d. h. einer sichtbaren, individualisierenden Beschriftung oder Prägung - zugeordnet werden können, da die in den Chip eingeschriebenen Personalisierungsdaten bei der optischen Personalisierung nur schwer ausgelesen werden können.

Beispielsweise offenbart die DE 195 00 925 A1 eine Chipkarte zur kontaktlosen Datenübertragung, die jedoch an einer ihrer Außenseiten mit Kontaktflächen versehen ist, so dass auch hier die oben genannten Nachteile im Zusammenhang mit der Personalisierung auftreten.

Weiterhin ist im Stand der Technik die Verwendung eines Einmalpassworts beschrieben. Ein Einmalpasswort (engl. One-Time Password - OTP) ist ein Authentifikationsverfahren, bei dem ein Passwort nur einmal für eine Session benutzt werden kann. Damit wird ausgeschlossen, dass ein Angreifer ein Passwort abhören und erneut verwenden kann. Das Verfahren wird auch als Wechselcodeverfahren bezeichnet. Im Prinzip gibt es dafür zwei Möglichkeiten zur Umsetzung. Entweder verwendet man vorgenerierte Listen, die dem Benutzer vorher über einen sicheren Kanal übertragen worden sein müssen. Die geschieht zum Beispiel bei den TANs des PIN/TAN-Verfahrens. Oder man setzt kryptographische Hash-Funktionen zur Generierung von nur kurzzeitig gültigen Einmalpasswörtern ein. Beispiele sind SecurID oder S/Key.

Um eine Eingabe an einem kapazitiven Bildschirm oder Berührungsbildschirm vorzunehmen, sind im Stand der Technik spezielle Eingabestifte beschrieben. Der kapazitive berührungsempfindliche Bildschirm detektiert die Position des Eingabestifts, der die Transkapazitätskopplung zwischen Zeilen- und Spaltenelektroden ändert. Auf einem kapazitiven berührungsempfindlichen Bildschirm erfolgt die Eingabe oft durch den oder die Finger eines Benutzers. Allerdings kann der Finger des Benutzers einen Teil einer Bedienfläche des kapazitiven berührungsempfindlichen Bildschirms verdecken. Aufgrund dessen kann mittels des Fingers des Benutzers keine positionsgenaue Eingabe erfolgen. Ferner weist ein herkömmlicher Eingabestift für einen kapazitiven berührungsempfindlichen Bildschirm eine Eingabestiftspitze mit einer bestimmten Berührungsfläche zum Berühren des kapazitiven berührungsempfindlichen Bildschirms auf. Allerdings ist der herkömmliche Eingabestift nicht imstande, exakt auf eine Position, die einem Zielmuster mit einer kleineren Fläche als der Berührungsfläche entspricht, hinzuzeigen.

Nachteilig bei den im Stand der Technik offenbarten Eingabemitteln ist, dass diese einfach sind und somit keine komplexen und sicheren Dateneingaben ermöglichen. Außerdem können mit den offenbarten Mitteln keine schnellen Eingaben vorgenommen werden.

Aufgabe der Erfindung war es, ein Mittel bereitzustellen, was eine Eingabe an einem Berührungsbildschirm ermöglicht und nicht die Nachteile oder Mängel des Standes der Technik aufweist.

Gelöst wird die Aufgabe durch die unabhängigen Ansprüche. Vorteilhafte Ausführungen ergeben sich aus den Unteransprüchen.

Es war völlig überraschend, dass ein Eingabemittel, umfassend mindestens
a. ein elektrisch nicht leitfähiges Substrat,
b. eine auf dem Substrat vorliegende elektrisch leitfähige Fläche,
c. eine elektrische Leiterbahn
d. eine Kontrolleinheit zur elektrischen Verschaltung von Flächen gemäß b. und
e. eine Energiequelle
bereitgestellt werden kann, was nicht die Nachteile und Mängel des Stands der Technik aufweist und eine transportable (mobile) Eingabe von Daten, beispielsweise Kennwörtern, vorzugsweise Einmalpasswörtern ermöglicht. Bei dem erfindungsgemäßen Eingabemittel ist mindestens eine elektrisch leitfähige Fläche über mindestens eine Leiterbahn mit der Kontrolleinheit elektrisch verbunden. Mithilfe des Eingabemittels ist es vorteilhafterweise möglich, ein Kennwort durch eine Berührung des Mittels zu generieren, was dann an einen Empfänger, beispielsweise an eine Auswerteeinheit eines, einen Berührungsbildschirm beinhaltenden Gerätes weitergegeben werden kann. Es wird mithin ein sicheres und mobiles Eingabemittel zur Verfügung gestellt, mit dem zum einen eine Autorisierung/Authentifizierung erreicht werden kann, was aber auch zum anderen als Bezahlmittel und/oder zur Identifizierung des Bezahlenden verwendet werden kann. Das Eingabemittel kann universell eingesetzt werden und ist vorzugsweise durch Massenherstellungsverfahren herstellbar, was sich wiederum in einem niedrigen Anschaffungspreis des Eingabemittels widerspiegelt. Im Sinne der Erfindung werden die Begriffe "Code", "Kennwort" oder "Passwort" analog verwendet.

Daten bezeichnen im Sinne der Erfindung Gebilde aus Zeichen oder kontinuierliche Funktionen, die aufgrund bekannter oder unterstellter Abmachungen Informationen darstellen, vorrangig zum Zweck der Verarbeitung und als deren Ergebnis. Die Daten oder Informationen sind (maschinen-) lesbar und -bearbeitbar und sind zur Kommunikation, Interpretation oder zur Verarbeitung nutzbar. Dem Fachmann der Informatik ist bekannt, was mit dem Begriff "Daten" bezeichnet wird.

Im Sinne der Erfindung bezeichnet eine Auswerteeinheit elektrische und elektronische Mittel, die in einem Berührungsbildschirm oder dem elektrischen Gerät, das den Berührungsbildschirm umfasst, vorliegen und der Interpretation und Verarbeitung der über den Berührungsbildschirm erfolgten Eingaben dienen.

Das Eingabemittel umfasst ein elektrisch nicht leitfähiges Substrat, auf welchem mindestens eine elektrisch leitfähige Fläche aufgebracht ist. Es kann auch bevorzugt sein, mehrere elektrisch leitfähige Flächen in Form eines oder mehrerer Arrays auf dem Substrat anzuordnen, sodass ein Array oder mehrere Arrays von miteinander nicht verbundenen elektrisch leitfähigen Flächen bereitgestellt werden. Im Sinne der Erfindung bezeichnet ein Array eine Anordnung von elektrisch leitfähigen Flächen auf einem elektrisch nicht leitfähigen Substrat. Diese elektrisch leitfähigen Flächen haben eine Ableitung in Form von Leiterzügen oder Leiterbahnen zu einer Kontrolleinheit. Das heißt, alle Ableitungen werden in der Kontrolleinheit, z.B. einem Controllerchip zusammengeführt. Die Flächen sind somit lediglich über die Kontrolleinheit elektrisch miteinander verbunden, wobei vorzugsweise keine direkte elektrische Verbindung zwischen den Flächen (außer über die Kontrolleinheit) besteht.

Das Eingabemittel kann vorteilhafterweise durch ein in Kontakt bringen mit einem Berührungsbildschirm eine kapazitive Wechselwirkung bewirken, die eine Eingabe auf dem Berührungsbildschirm auslöst. Hierdurch werden auf dem Berührungsbildschirm Berührungsereignisse (oder Touchevents) generiert, die wiederum ein Ereignis in dem, den Berührungsbildschirm beinhalteten elektrischen Gerät auslösen.

Weiterhin ist es bevorzugt, dass ein Benutzer das Eingabemittel aktiviert und über die elektrisch leitfähigen Flächen des Eingabemittels ein Code übertragen wird. Der Code kann mit einem Erwartungswert verglichen werden, wobei der Benutzer als autorisiert gilt, wenn eine Übereinstimmung feststellbar ist. Es kann so ein Zugang zu einem elektrischen Gerät oder einem Programm restringiert werden. Es kann auch vorteilhaft sein, dass ein sequentielles Durchschalten mehrerer Codes durchgeführt wird, welche die Zielinformation beinhalten, sodass eine größere Datenmenge an die Auswerteeinheit des Berührungsbildschirms übertragbar ist.

Das Substrat ist vorzugsweise ausgewählt aus der Gruppe umfassend Kunststoff, Papier, Karton, Holzwerkstoff, Folie, Verbundwerkstoff, Glas, Keramik, Leiterplattenmaterial, Textilien, Leder oder einer Kombination davon. Das Substrat ist insbesondere ein elektrisch nicht leitender Stoff, der vorzugsweise flexibel ist und ein geringes Gewicht aufweist. Es können lichtdurchlässige oder lichtundurchlässige Substrate verwendet werden. Bevorzugte Kunststoffe umfassen insbesondere PVC, PETG, PV, PETX und PE, wobei insbesondere synthetische Papiere bevorzugt sind.

Auf dem Substrat ist mindestens eine elektrisch leitfähige Fläche aufgebracht. Es ist auch bevorzugt, dass die elektrisch leitfähigen Flächen einzeln, paarweise oder zu funktionellen Gruppen auf dem Substrat angeordnet sind. Im Sinne der Erfindung bezeichnen funktionelle Gruppen insbesondere eine Anordnung von Flächen, welche insbesondere dazu dienen, den Einfluss der Wechselwirkung mit dem Berührungsbildschirm bzw. dem den Berührungsbildschirm beinhaltenden Gerät gezielt zu verändern. Darunter zählt beispielsweise das Erzeugen, Schwingen, Hin- und Herwechseln, Verschieben, oder Fortschreiten von Wechselwirkungen welche überraschenderweise Touchevents auslösen. Diese wiederum machen überraschenderweise die Wechselwirkungen für den Berührungsbildschirm bzw. das den Berührungsbildschirm beinhaltende Gerät in Form von Daten und/oder Signalen auswertbar.

Die Form der Fläche ist beliebig und kann in unterschiedlichen Ausführungen gestaltet sein. So können beispielsweise runde, eckige oder ovale Flächen oder Kombinationen auf dem Substrat vorliegen. Es können auch komplexe geometrische Formen realisiert werden oder mehrere einzelne Flächen miteinander kombiniert sein. Es kann bevorzugt sein, dass auf einem Substrat mehrere elektrisch leitfähige Flächen aufgebracht sind. Vorteilhafterweise können Form, Orientierung, Anzahl, Ausrichtung, Abstand und/oder Position der Flächen variieren. Dem Fachmann sind mit einem gewissen Layout erzeugte Flächen auch als strukturierte Flächen bekannt. Die Strukturierung der Flächen erfolgt im jeweiligen Herstellungsverfahren.

Es kann auch bevorzugt sein, taktile, visuelle, akustische oder haptische Elemente auf eine Schicht des Eingabemittels oder die elektrisch leitfähige Fläche aufzubringen, um einem Benutzer eine Rückmeldung zu geben. Hierdurch kann die Bedienung des Eingabemittels erheblich vereinfacht werden. Beispielsweise kann ein visuelles Element, wie eine LED, auf dem Eingabemittel angeordnet sein um dem Benutzer beispielsweise zu signalisieren, ob das Eingabemittel aktiv ist (korrekte Bedienung). Das heißt, das visuelle Element kann beispielsweise als Zustandsanzeige verwendet werden. Man kann ferner solche Anzeigeelemente nutzen, um die verbleibende Batterielebensdauer anzuzeigen oder um eine einfache Restlebensdauerabschätzung des Eingabemittels vornehmen zu können.

Die elektrisch leitfähige Schicht ist bevorzugt eine Metallschicht, eine Metallpartikel enthaltende Schicht, eine elektrisch leitfähige Partikel enthaltende Schicht, elektrisch leitfähige Polymerschicht oder eine Schicht aus wenigstens einer Kombination dieser Schichten. Generell kann jedes Material verwendet werden, das elektrisch leitfähig ist. Des Weiteren können auch metallorganische Materialien, bestehend aus einer Verbindung aus Metall und Kohlenstoff verwendet werden. Metalle bezeichnen im Sinne der Erfindung insbesondere chemische Elemente, die sich im Gegensatz zu den Nichtmetallen im Periodensystem links der diagonalen Trennungslinie, beginnend mit dem Element Beryllium (2. Gruppe) bis hin zum Polonium (16. Gruppe), befinden, sowie deren Legierungen und intermetallische Verbindungen (umfassend Laves-Phasen, Heusler-Phasen, Zintl-Phasen, Hume-Rothery-Phasen, NiTi, Co5, Nb3Sn oder Ni3Al) mit charakteristischen metallischen Eigenschaften. Metalle umfassen u. a. Aluminium, Blei, Chrom, Eisen, Gold, Indium, Cobalt, Kupfer, Magnesium, Mangan, Molybdän, Natrium, Nickel, Silber, Titan, Wolfram, Zink oder Zinn. Weiterhin können Metalloxide wie beispielsweise Indiumzinnoxid eingesetzt werden. Dies ist besonders vorteilhaft, weil es zwar elektrisch leitfähig ist, aber auch transparent und deswegen keine Fläche auf dem Berührungsbildschirm optisch abgedeckt wird.

Polymere bezeichnen im Sinne der Erfindung insbesondere eine Substanz, die sich aus einem Kollektiv chemisch einheitlich aufgebauter, sich in der Regel aber hinsichtlich Polymerisationsgrad, Molmasse und Kettenlänge unterscheidender Makromoleküle (Polymermoleküle) zusammensetzt. Die Polymere sind vorzugsweise elektrisch leitfähig. Bei solchen polymereinheitlichen Stoffen sind alle Makromoleküle bevorzugt gleich aufgebaut und unterscheiden sich lediglich durch ihre Kettenlänge (Polymerisationsgrad). Man kann derartige Polymere als Polymerhomologe bezeichnen. Polymere können aus der Gruppe umfassend anorganische Polymere, metallorganische Polymere, voll- oder teilaromatische Polymere, Homopolymere, Copolymere, Biopolymere, chemisch modifizierte Polymere und/oder synthetische Polymere ausgewählt werden. Besonders bevorzugt sind Polymere ausgewählt aus Paraphenylen, Polyacetylen, Polypyrrol, Polythiophen, Polyanilin (PANI) und PE-DOT.

Elektrisch leitfähige Substanzen sind weiterhin insbesondere Ruß- oder Graphitpartikel. Ruß beschreibt eine Erscheinungsform des Kohlenstoffs, die sich bei unvollständiger Verbrennung bzw. thermischer Spaltung von dampfförmigen kohlenstoffhaltigen Substanzen bildet. Ruß kann in pulverförmiger oder granulierter Form verwendet werden. Es können auch Ruß-Präparationen, beispielsweise als flüssige, pastenförmige oder feste Ruß-Lösemittel-Konzentrate, in denen der Ruß gleichmäßig dispergiert ist, verwendet werden. Je nach Herstellungsweise und Rohstoff kann Ruß neben Kohlenstoff Wasserstoff, Stickstoff oder Sauerstoff enthalten. Ruß weist eine hervorragende Pigment-Eigenschaft, sowie eine Unlöslichkeit in allen Lösungsmitteln, Resistenz gegen die meisten Chemikalien, Lichtechtheit, hohe Farbtiefe u. Farbstärke auf. Graphit bezeichnet im Sinne der Erfindung insbesondere eine stabile Modifikation des Kohlenstoffs. Aufgrund eines schichtartigen Aufbaus ist Graphit ein guter Leiter.

Die elektrisch leitfähigen Flächen können vorteilhafterweise mittels additiver Verfahren wie Druckverfahren, Stempelverfahren, PVD- und CVD- Verfahren, galvanischen Verfahren oder subtraktiven Verfahren wie Laserstrukturierung, Bürstverfahren, Fräsverfahren usw. aufgebracht werden. Auch können semi-additive Verfahren wie z.B. Ätzverfahren vorteilhaft sein.

In einer Ausführungsform sind die elektrisch leitfähigen Flächen mittels eines Transferverfahrens auf das Substrat aufgebracht. Hierbei ist insbesondere ein Folientransferverfahren, besonders ein Thermotransferverfahren bevorzugt. Dem Fachmann sind derartige Verfahren bekannt. Selbstverständlich können auch alle anderen Verfahren zur Aufbringung einer elektrisch leitfähigen Fläche verwendet werden.

In einer weiteren bevorzugten Ausführungsform der Erfindung weist das Eingabemittel mindestens eine Schicht und/oder mindestens eine weitere Substratlage auf. Das Substrat mit den aufgebrachten elektrisch leitfähigen Flächen kann von mindestens einer weiteren Schicht oder Substratlage bedeckt oder umgeben sein. Hierbei ist es bevorzugt, dass die weitere Schicht oder Substratlage aus dem gleichen Material wie die Substratschicht besteht, wobei auch ein unterschiedliches Material bevorzugt sein kann. Die weitere Schicht oder die Substratlage kann die elektrisch leitfähigen Flächen und/oder das Substrat bedecken. Hierbei kann es sich beispielsweise um eine Decklage oder ein Passepartout handeln. Die weitere Schicht oder Substratlage ist bevorzugt aus Papier, Karton, Holzwerkstoffe, Verbundwerkstoffe, Metall, Laminate und/oder Kunststoffe gefertigt und kann mit einer Farb- und/oder Lackschicht bedruckt oder beschichtet sein. Die weitere Schicht oder Substratlage kann auch eine Kleberschicht, eine Harzschicht, eine Wachsschicht, eine Papierschicht, eine Farbschicht, eine Lackschicht und/oder eine Folie sein. Es ist natürlich auch denkbar, Kombinationen der Vorgenannten aufzubringen. Die Kleberschicht bezeichnet im Sinne der Erfindung insbesondere einen elektrisch nicht leitenden Kleber, der derart aufgebracht ist, dass er die elektrisch leitfähigen Flächen umgibt. Durch die weitere Schicht und die Substratlage ist eine kompakte Bauweise des Eingabemittels möglich, wobei es auch vor äußeren Krafteinwirkungen und Verschmutzungen geschützt ist.

Die Kontrolleinheit des Eingabemittels umfasst vorzugsweise mindestens eine digitale und/oder analoge Schaltung. Eine digitale Schaltung ist vorzugsweise ein Mikrocontroller, kann aber auch ein ASIC, ein FPGA oder eine diskrete digitale Schaltung aus Logikgattern, Halbleiterbauelementen, elektromechanischen oder mechanischen Bauelementen oder eine Kombination davon sein. Die digitale Schaltung dient der Generierung der zu übertragenden Daten/Codes und der Umwandlung derer in digitale oder analoge Signale, die entweder direkt oder über die analoge Schaltung über die elektrisch leitfähigen Verbindungen an die elektrisch leitfähigen Flächen (Elektroden) weitergeleitet werden. Eine analoge Schaltung dient der Signalformung und kann beispielsweise einen Hochpass, einen Tiefpass, ein Glied zur Gleichspannungsentkopplung, eine Arbeitspunkteinstellung (Vorspannung) oder eine Ladungspumpe enthalten. Für jede der elektrisch leitfähigen Verbindungen zu jeweils einer der elektrisch leitfähigen Flächen existieren vorzugsweise gleichartige analoge Schaltungen, es können jedoch auch unterschiedliche Auslegungen der analogen Schaltung für die einzelnen Verbindungen zu den elektrisch leitfähigen Flächen existieren. Bevorzugt ist auch, auf der Kontrolleinheit eine mechanische Anordnung anzubringen, welche selbst durch eine höhere Instanz, wie beispielsweise einem Bentuzer gesteuert wird und elektrische Brücken zwischen den Leiterzügen öffnet und schließt (Relaisbauweise).

Es kann vorteilhaft sein, wenn die Digitalschaltung der Kontrolleinheit eine elektronische, elektromechanische oder mechanische Schaltung ist.

Das Eingabemittel umfasst vorzugsweise eine Energiequelle, um eine autarke Funktionsweise des Eingabemittels sicherzustellen. Die Energiequelle kann beispielsweise eine Batterie, ein Akkumulator, eine Solarzelle, ein Piezo-Element, ein Kondensator oder eine Kombination hiervon sein. Die Energiequelle ist mit der Kontrolleinheit elektrisch verbunden und versorgt diese mit Energie. Es kann bevorzugt sein, dass die Energiequelle durch einen externen Netzanschluss wiederaufladbar, austauschbar oder auswechselbar ist. Hierfür verfügt die Energiequelle über entsprechende Verbindungsanschlüsse. Vorteilhafterweise kann die Energiequelle als Solarzelle ausgestaltet sein, die durch eine Lichtquelle aufladbar ist. Hierfür können künstliche oder natürliche Lichtquellen herangezogen werden. Es kann auch bevorzugt sein, eine "energy harvesting"-Methode zu nutzen, um das Eingabemittel mit Energie zu versorgen. Beispielsweise könnte die Energie von dem Berührungsbildschirm bereitgestellt werden, der mit dem Eingabemittel in Kontakt steht. Auch kann das Eingabemittel vorteilhafterweise mittels Induktion (z. B. einer Induktionsspule) mit Energie versorgt werden.

Das Eingabemittel umfasst vorzugsweise mindestens eine Taste und/oder einen Schalter. Auf dem Eingabemittel kann ein Schalter oder eine Taste angeordnet sein, durch welche Kontakte zwischen den Leiterbahnen überbrückt werden, d.h. eine elektrische Verbindung herstellbar ist. Der Schalter oder Taster kann vorzugsweise zum Einschalten der Versorgungsspannung, d.h. zur Herstellung einer leitfähigen Verbindung zwischen der Energiequelle und der Kontrolleinheit dienen. Es ist auch möglich einen oder mehrere Taster oder Schalter als Eingabemöglichkeit mit der Kontrolleinheit zu verbinden, um damit assoziierte Funktionen auf der Kontrolleinheit auszulösen. Beispielweise kann die Taste als Schnappscheibe ausgestaltet sein, die eine einfache und schnelle Betätigung ermöglicht.

Die Erfindung betrifft weiterhin ein System umfassend ein Eingabemittel und einen Berührungsbildschirm, wobei der Berührungsbildschirm mit dem Eingabemittel wirkverbunden ist. Das den Berührungsbildschirm beinhaltende Gerät ist bevorzugt ausgewählt aus der Gruppe umfassend Smartphones, Handys, Displays, Tablet-PCs, Notebooks, Touchpad-Geräte, Grafiktabletts, Fernseher, PDAs, MP3-Player und kapazitive Eingabegeräte. Ein Berührungsbildschirm kann beispielsweise auch Bestandteil von Eingabegeräten sein. Berührungsbildschirme sind auch als Touchscreen, Tastschirm oder Sensorbildschirm bekannt. Derartige Eingabegeräte werden unter anderem in Smartphones, PDAs, Touchdisplays oder Notebooks eingesetzt.

Es war völlig überraschend, dass das Eingabemittel für eine Vielzahl unterschiedlicher Berührungsbildschirme verwendet werden kann. Versuche haben gezeigt, dass insbesondere kapazitive Berührungsbildschirme besonders gut geeignet sind. Hierbei wird ein Eingabemittel mit dem Berührungsbildschirm wirkverbunden. Wirkverbunden bezeichnet im Sinne der Erfindung insbesondere, dass das Eingabemittel mit dem Berührungsbildschirm zumindest zeitweise derart verbunden oder verknüpft ist, dass von einem Bediener des Eingabemittels über eine elektrische und/oder mechanische Verbindung ein Touchevent auf dem Berührungsbildschirm ausgelöst wird.

Hierfür kann es vorteilhaft sein, dass der Berührungsbildschirm über visuelle, akustische, taktile, haptische oder mechanische Positionierungsmittel verfügt, die eine optimale Positionierung des Eingabemittels auf dem Berührungsbildschirm ermöglichen. Beispielsweise kann eine Kante visuell auf dem Bildschirm dargestellt werden oder der Rand des Bildschirms als Mittel zur Positionierung genutzt werden. Die korrekte oder falsche Positionierung kann dem Benutzer einfach durch visuelle, akustische, taktile oder haptische Mittel vermittelt werden. Weiterhin kann die durch das Eingabemittel ausgelöste Eingabe auf dem Berührungsbildschirm mittels eines Fortschrittsbalkens angezeigt werden. Hierdurch kann dem Benutzer einfach und schnell vermittelt werden, wie weit die Eingabe fortgeschritten ist.

Mit dem Eingabemittel ist eine drahtlose Kommunikation/Datenübertragung zwischen mobilen oder stationären Endgeräten mit einem Berührungsbildschirm möglich. Das Eingabemittel überträgt Daten über den Berührungsbildschirm an das Endgerät. Die Ansteuerung des Berührungsbildschirms erfolgt vorzugsweise mittels einer kapazitiven Kopplung zwischen dem Berührungsbildschirm und dem Eingabemittel. Das Eingabemittel wird dazu auf den Berührungsbildschirm aufgelegt oder in dessen Nähe gebracht, sodass zwischen Berührungsbildschirm und Eingabemittel ein elektrisches Feld erzeugt wird, welches das Auflegen eines oder mehrerer Finger auf dem Touchscreen simuliert und eine Toucheingabe auf dem Endgerät erzeugt.

Das Eingabemittel wird zur Eingabe vorzugsweise in räumlicher Nähe zu dem Berührungsbildschirm angeordnet. Eine räumliche Nähe bezeichnet im Sinne der Erfindung insbesondere, dass ein direkter Kontakt oder indirekter Kontakt besteht und das Eingabemittel in funktionaler Wechselwirkung zum Berührungsbildschirm steht. Diese Wechselwirkung kann durch verschiedene physikalische Wirkprinzipien oder Kombinationen derer erreicht werden, z.B. kapazitiv, induktiv, elektromagnetisch, elektronisch oder mechanisch. Die jeweilige Wechselwirkung hängt vom konkret vorliegenden Berührungsbildschirmtyp, d. h. von der Berührungsbildschirm-Technologie ab. Die Funktion des Eingabemittels ist vorzugsweise das Auslösen mindestens eines Berührungsereignisses auf dem Berührungsbildschirm. Ein Berührungsereignis oder auch Touchevent genannt, bezeichnet im Sinne der Erfindung insbesondere ein Auslösen eines Ereignisses auf dem Berührungsbildschirm.

Sobald ein Benutzer das Eingabemittel an einer definierten Position berührt bzw. in Annäherung kommt oder eine Taste oder einen Schalter mit einem Finger berührt oder betätigt, wird ein elektrisches Signal über die Leiterbahn oder-bahnen an die elektrisch leitfähigen Flächen geleitet, die wiederum kapazitiv ein oder mehrere Touchevents auf dem Berührungsbildschirm auslösen. Die so projizierte Toucheingabe des Eingabemittels auf dem Berührungsbildschirm kann beispielsweise ein, im Eingabemittel generiertes Einmalpasswort an den Berührungsbildschirm übertragen, was bevorzugt zur Authentifizierung und/oder Autorisierung verwendet werden kann oder zur Dateneingabe. Somit betrifft die Erfindung auch die Verwendung eines Eingabemittels zur Authentifizierung, Autorisierung und/oder Dateneingabe. Weiterhin ist bevorzugt, dass das Eingabemittel zur Generierung eines Einmalpassworts, Passworts oder Codes verwendet wird.

Hierdurch kann beispielsweise ein einen Berührungsbildschirm aufweisendes Gerät oder ein Programm freigeschaltet werden. Es war völlig überraschend, dass das Eingabemittel bevorzugt für Anwendungen in zahlreichen Bereichen des Wirtschaftslebens verwendet werden kann. Diese umfassen beispielsweise Spielkarten, Sammelkarten, Briefmarken, Frankierung, Porto, Warenlogistik, Warenverfolgung, digitale Ordnungssysteme, Katalogisierung, digitalem Karteikartensystem, Einlass, Eintrittskarten, Zugang zu geschlossen Bereichen, virtuellen Inhalten, Marketinganwendungen, Kundenbindung, Lotterie- und Gewinnspiele, Mitgliederausweise, Zeitkarten, Bezahlanwendungen, Echtheits-Zertifikate, Zertifikate, Fälschungssicherungen, Kopierschutze, Signaturen, Lieferscheine, Kontoauszüge, Beipackzettel, Gegenstände innerhalb von Computerspielen, Music/Video/E-Books-Downloads, Bonusmarken/-programme, Gerätesteuerungen oder Geschenkkarten, ohne darauf begrenzt zu sein.

Das Eingabemittel ist in einer Ausführungsform mittels einer temporären Wirkverbindung an oder auf dem Berührungsbildschirm befestigt, sodass das Substrat, mit den elektrisch leitfähigen Flächen mit dem Berührungsbildschirm in Kontakt oder zumindest räumlicher Annäherung steht und eine Wechselwirkung mit dem Berührungsbildschirm zulässt. Es ist bevorzugt, das Eingabemittel mittels form-, kraft- und/oder stoffschlüssigen Verbindungen mit dem Berührungsbildschirm, vorzugsweise reversibel zu verbinden. Das heißt, der Zustand vor der Herstellung der Verbindung kann wiederhergestellt werden, ohne dass das Eingabemittel oder der Berührungsbildschirm oder deren Umgebung bleibende Veränderungen erfahren. In einer weiteren Ausführungsform ist das Eingabemittel nach Klebezettelprinzip (z.B. Post-it-notes) oder mit sonstigen Haft-Klebestoffen an dem Berührungsbildschirm befestigt. Ferner kann es vorteilhaft sein, dass lediglich die leitfähigen Flächen des Eingabemittels mit dem Berührungsbildschirm verbunden oder in bevorzugten Kontakt gebracht werden.

Es ist ferner denkbar, dass weitere Elemente zur temporären oder dauerhaften Fixierung des Eingabemittels am Berührungsbildschirm zum Einsatz kommen. Denkbar sind alle Formen von Kleber (elektrisch leitfähig und elektrisch nicht leitfähig) oder Leimen, Gummis, Banderolen, Einschubhilfen, Klammern usw. Es sind auch Vorrichtungen, Hüllen etc. für das den Berührungsbildschirm beinhaltende Gerät denkbar. Hierdurch kann ein Verrutschen oder Verschieben des Eingabemittels verhindert werden.

Das Eingabemittel kann bevorzugt eine Karte zur Zahlung von Waren und Dienstleistungen sein oder in eine solche integriert sein. Bei einer solchen Karte kann es sich um eine electronic-cash-Karte oder Kreditkarte oder eine sonstige im Zahlungsverkehr benutzbare Karte handeln. Die Kreditkarte ist eine aus Kunststoff (z.B. PVC) hergestellte Karte im Format einer Scheckkarte (ISO 7810). Auf der Vorderseite der Kreditkarte sind die Kartendaten erhaben geprägt (sogenannte Hochprägung). Es sind jedoch auch Karten bekannt, die keine Hochprägung aufweisen. Solche Prepaid-Karten besitzen ein vorausbezahltes Guthaben. Auf der Rückseite trägt jede Karte die Unterschrift des Karteninhabers und häufig eine Kartenprüfnummer (KPN). Weiterhin ist auf der Rückseite der Karte ein Magnetstreifen angeordnet, auf dem die Kartendaten gespeichert sind. Außerdem können Chips auf der Karte angebracht sein. Vorteilhafterweise weisen die Karten einen EMV-Chip auf, um eine SEPA-Kompatibilität zu erreichen. Die dazugehörige Spezifikation nennt sich EMV (Europay, MasterCard, Visa). Außerdem sind auch Kreditkarten bekannt, die eine kontaktlose Bezahlung nach dem ISO/IEC 14443-Verfahren ermöglichen. Eine weitere Neuerung, zur Erhöhung der Sicherheit, ist der Hologramm-Magnetstreifen.

Das Eingabemittel ist vorzugsweise derart in die Karte integriert, dass die ursprüngliche Funktion der Karte nicht beeinflusst wird. Die Karte kann vielmehr als zusätzliches Mittel zur Generierung eines Codes zur Autorisierung/Authentifizierung verwendet werden. Hierdurch kann die Sicherheit des elektronischen Zahlungsverkehrs erheblich erhöht werden, da neben den Sicherheitsmerkmalen der Karte nun eine weitere Sicherheitsschranke eingefügt ist, die das Kopieren der Karte unmöglich macht. Neben den ursprünglichen Sicherheitsschranken muss ein Benutzer auch ein Einmalpasswort generieren, was jedoch nur mit dem Eingabemittel auf der Karte möglich ist. Hierdurch kann ein hoher Sicherheitsstandard hergestellt werden. Dies ist insbesondere bei Zahlungen im Internet von hoher Relevanz. Das Eingabmittel kann mit einem Smartphone oder einem, einen Berührungsbildschirm aufweisendes elektrisches Gerät interagieren und einen Code zur Authentifizierung generieren, wodurch ein Zahlungsverkehr auf einer Website sicher abgewickelt werden kann.

Das Eingabemittel kann als Bestandteil einer solchen Karte ausgeführt sein, wobei es auch als unabhängige Karte zur Zahlung von Waren und Dienstleistungen ausgestaltet sein kann. Mittels des Eingabemittels kann vorzugsweise ein Passwort generiert werden, durch welches eine Autorisierung und/oder Authentifizierung erfolgt. Das Eingabemittel kann beispielsweise einen Verbraucher identifizieren und/oder eine Zahlung freischalten.

Die Erfindung betrifft auch ein Verfahren zur Eingabe von Daten an einem Berührungsbildschirm umfassend
a. ein Eingabemittel umfassend mindestens
   i. ein elektrisch nicht leitfähiges Substrat,
   ii. eine auf dem Substrat vorliegende elektrisch leitfähige Fläche,
   iii. eine elektrische Leiterbahn,
   iv. eine Kontrolleinheit und
   v. eine Energiequelle,
   wobei mindestens eine elektrisch leitfähige Fläche über mindestens eine Leiterbahn mit der Kontrolleinheit elektrisch verbunden ist
b. und einen Berührungsbildschirm,
wobei das Eingabemittel mit dem Berührungsbildschirm wirkverbunden wird und die Flächen elektrisch aktiviert werden, wodurch eine kapazitive Einkopplung von Eingabemittel zum Berührungsbildschirm erreicht und eine Dateneingabe auf dem Berührungsbildschirm erzielt wird. Diese können nun interpretiert, decodiert oder anderweitig weiterverarbeitet werden. Hierbei können die eingegebenen Daten vorteilhafterweise zufällig erzeugte oder determinierte Daten sein. Das heißt, das Eingabemittel kann vorteilhafterweise ein Einmalpasswort oder Passwort generieren, was zuvor bereits bestimmt war und mit einem Erwartungswert verglichen wird. Weiterhin ist es aber bevorzugt, dass das Eingabmittel ein Passwort generiert, welchens zufällig ist. Hierbei weist das Passwort Parameter auf, die eine eindeutige Authentifizierung ermöglichen. Es kann auch bevorzugt sein, dass die Dateneingabe auf dem Berührungsbildschirm statisch und/oder dynamisch erfolgt. Eine statische Dateneingabe bezeichnet im Sinne der Erfindung insbesondere, dass ein Berührungsereignis oder Touchevent mittels einer oder mehrerer Fläche(n) aktiviert und deaktiviert (z.B. kapazitive Einkopplung ein/aus) wird. Dahingegen bezeichnet eine dynamische Dateneingabe insbesondere eine Ansteuerung mehrerer Flächen (z.B. paarweise Anordnung), wodurch das Berührungsereignis oder die Position der Einkopplung auf dem Berührungsbildschirm verschoben oder bewegt und hierdurch ein Signal übertragen wird. Dies wird beispielsweise dadurch erreicht, dass eine wechselseitige oder alternierende Aktivierung der kapazitiven Einkopplung der elektrisch leitfähigen Flächen einer funktionellen Gruppe erfolgt. Das übertragene Signal kann dabei bevorzugt kodiert sein.

Es ist weiterhin bevorzugt, dass die vom Eingabemittel erzeugten Daten einem Datensatz in einem Datenverarbeitungssystem zugeordnet werden können und der Datensatz konstant bleibt. In einer bevorzugten Ausführungsform werden die vom Eingabemittel erzeugten Daten einem Datensatz in einem Datenverarbeitungssystem zugeordnet, wobei sich der Datensatz verändert. Dies kann beispielsweise durch Verwendung des Eingabemittels bzw. des oder der von dem Eingabemittel generierten Kodes und/oder durch Zeit passieren, ohne darauf begrenzt zu sein.

Vorteilhafterweise kann das Eingabemittel derart verwendet werden, dass das Eingabemittel in Verbindung mit einem Berührungsbildschirm über die Auslösung eines Touchevents bzw. der Generierung eines Kodes oder Einmalpasswortes einer Aktion eines Datenverarbeitungssystems zugeordnet werden kann oder diese auslöst. Diese Aktion trifft insbesondere auf nicht-vernetzte Datenverarbeitungssysteme und besonders bevorzugt auf vernetzte Datenverarbeitungssysteme zu.

Das Eingabemittel bzw. das System umfassend das Eingabemittel und den Berührungsbildschirm kann dazu verwendet werden, auf einem einen Berührungsbildschirm beinhaltenden Gerät assoziierte Ereignisse oder Aktionen auszulösen. Die assoziierten Ereignisse oder Aktionen sind systemtypisch bzw. system- und anwendungsbezogen.

Die Erfindung soll im Folgenden anhand von Beispielen und Figuren erläutert werden, ohne jedoch auf diese beschränkt zu sein. Es zeigen:
- Fig. 1A-D: Aufbau eines Eingabemittels
- Fig. 2A, B: Schnittdarstellung eines Eingabemittels
- Fig. 3A-D: analoge Schaltungen der Kontrolleinheit
- Fig. 4A-C: digitale Schaltungen der Kontrolleinheit
- Fig. 5A-C: Interaktion zw. einem Eingabemittel und einem Berührungsbildschirm
- Fig. 6A-C: Wirkverbindung zw. einem Eingabemittel und einem Berührungsbildschirm
- Fig. 7A, B: Eingabemittel mit digitaler / analoger Schaltung
- Fig. 8: Blockschaltbild einer Aktivierung des Eingabemittels

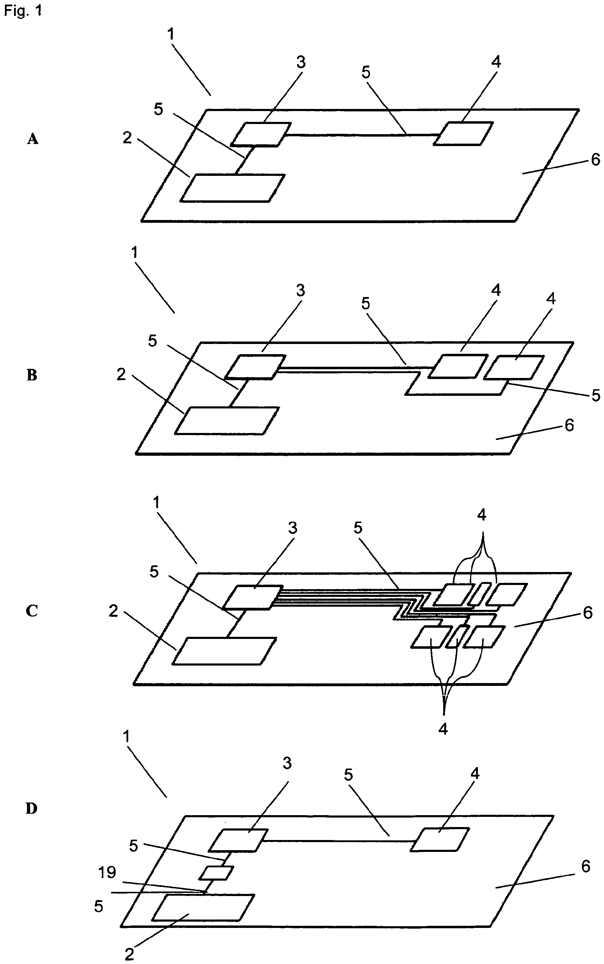

Fig. 1A-D zeigen einen Aufbau eines bevorzugten Eingabemittels 1. Das Eingabemittel 1 weist vorzugsweise ein elektrisch nicht leitfähiges Substrat 6 auf, welches beispielsweise aus Kunststoff gefertigt ist. Auf dem Substrat 6 ist mindestens eine elektrisch leitfähige Fläche 4 aufgebracht, die über eine elektrisch leitfähige Leiterbahn 5 mit einer Kontrolleinheit 3 verbunden ist. Die elektrisch leitfähige Fläche 4 kann insbesondere eine Metallschicht, eine Metallpartikel enthaltene Schicht, eine elektrisch leitfähige Partikel enthaltene Schicht oder eine elektrisch leitfähige Polymerschicht sein. Im Wesentlichen kann jegliches elektrisch leitfähige Material als Fläche 4 verwendet werden. Die Leiterbahn 5, die die Fläche 4 mit der Kontrolleinheit 3 verbindet, ist ebenfalls aus einem elektrisch leitfähigen Material gefertigt, beispielsweise aus dem gleichen Material wie die Fläche 4. Es kann auch bevorzugt sein, mehrere elektrisch leitfähige Flächen 4 auf dem Substrat 6 aufzubringen (siehe Fig. 1 B, C). Die elektrisch leitfähigen Flächen 4 sind über Leiterbahnen 5 mit der Kontrolleinheit 3 verbunden. Die Kontrolleinheit 3 ist wiederum mit einer Energiequelle 2, beispielsweise einer Batterie, einem Akkumulator, einer Solarzelle, einem Piezo-Element, einem Kondensator oder einer Kombination hiervon verbunden. Bei der Energiequelle kann es sich auch um eine "energy harvesting" Energiequelle handeln, so dass das Eingabemittel 1 seine Energie durch Abziehen von Energie von einer weiteren Energiequelle gewinnt. Im Sinne der Erfindung können die Begriffe Energieversorgung und Energiequelle gleichermaßen verwendet werden und bezeichnen insbesondere ein Mittel, dass das Eingabemittel mit elektrischer Energie versorgt. Hierbei kann es sich beispielsweise um Leuchtenergie eines Berührungsbildschirms 9 handeln. Das Eingabemittel 1 kann auch über Anschlüsse verfügen, um es beispielsweise mit einem Netzanschluss zu verbinden. Es können auch drahtlose Ladetechniken zur Aufladung der Energiequelle 2 des Eingabemittels 1 bevorzugt sein. In einem besonders bevorzugten Aufbau des Eingabemittels 1 (siehe Fig. 1 D) wird mittels eines Tasters 19 oder Schalters die normalerweise offene elektrische Verbindung zwischen der Energiequelle 2 und der Kontrolleinheit 3 geschlossen, wodurch die Kontrolleinheit 3 aktiviert wird, um Daten zu generieren und diese an ein einen Berührungsbildschirm aufweisendes Gerät 10 zu übertragen.

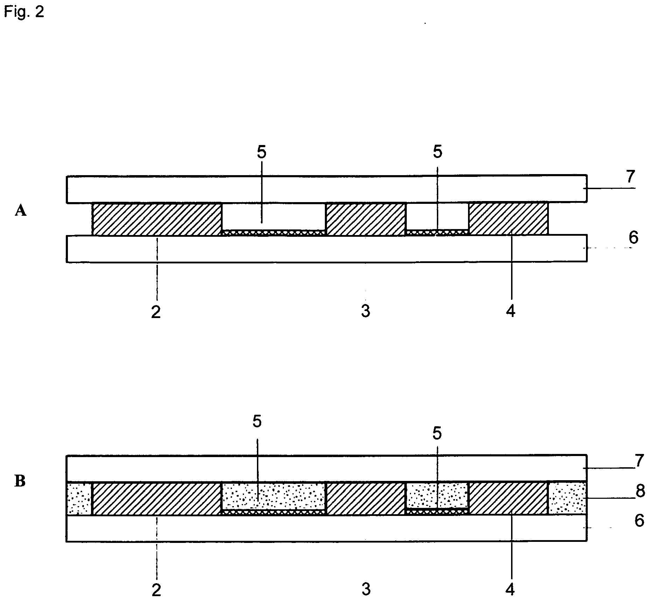

Fig. 2A, B zeigen eine Schnittdarstellung eines Eingabemittels 1. Das Eingabemittel 1 weist mindestens eine elektrisch leitfähige Fläche 4 auf, die auf einem elektrisch nicht leitfähigen Substrat 6 aufgebracht ist. Die Fläche 4 kann mittels dem Fachmann bekannten Additiv-oder Subraktivverfahren wie Drucken oder Ätzen auf das Substrat 6 aufgebracht werden. Die Fläche 4 ist über eine elektrisch leitfähige Leiterbahn 5 mit der Kontrolleinheit 3 verbunden, die wiederum mit der Energiequelle 2 verschaltet ist. In einer Ausführungsform kann das Eingabemittel 1 neben dem Substrat 6 eine weitere Schicht oder Lage aufweisen, die als Zwischenschicht 8 (siehe Fig. 2B) oder Decklage 7 ausgestaltet ist. Die Decklage 7 kann aus dem gleichen elektrisch nicht leitfähigen Material wie das Substrat 6 bestehen und dient vorzugsweise dem Schutz der Elemente des Eingabemittels 1 vor Krafteinwirkungen oder Verunreinigungen. Die Decklage 7 kann aber auch eine Lackschicht oder Folienschicht sein, die beispielsweise auf mindestens einer Zwischenlage 8 angebracht ist und mit Motiven oder Zeichen bedruckt werden kann. Die Zwischenlage 8 kann ein Füllmaterial sein. Als Füllmaterial kann beispielsweise eine Kleberschicht, vorzugsweise eine elektrisch nicht leitfähige Kleberschicht dienen. Es kann aber auch ein Passepartout als Zwischenlage 8 in das Eingabemittel 1 integriert werden. Mithilfe der Zwischenlage können die Elemente des Eingabemittels 1 stabilisiert und ebenfalls vor Krafteinwirkungen geschützt werden. Die mindestens eine Zwischenlage 8 gewährleistet zudem einen homogenen, gleichmäßigen und ebenen Produktaufbau, welcher durch weitere Verfahrensschritte, z.B. Bedruckung weiter veredelt werden kann.

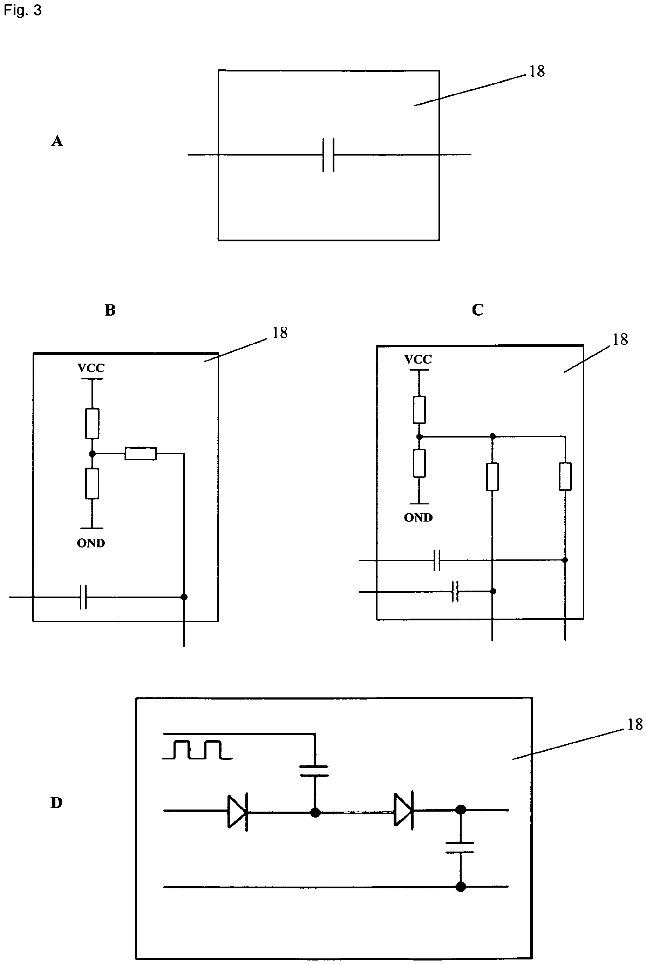

In Fig. 3A-D sind analoge Schaltungen der Kontrolleinheit 18 aufgezeigt. Es kann vorteilhaft sein, die digitalen Signale, die in der digitalen Schaltung 17 der Kontrolleinheit 3 generiert werden, über eine analoge Schaltung 18 und die Leiterbahn 5 an die elektrisch leitfähigen Flächen 4 zu führen, um die Signaleigenschaften derart zu ändern dass die kapazitive Kopplung zwischen den leitfähigen Flächen 4 des Eingabemittels 1 und den Elektroden des Berührungsbildschirms 9 verstärkt oder gedämpft wird. Die analoge Schaltung kann beispielsweise einen Signalverstärker, einen Signalabschwächer, einen Hochpass, einen Tiefpass, eine Arbeitspunkteinstellung, eine Gleichspannungsentkopplung, eine Signalterminierung oder eine Kombination solcher Elemente beinhalten, ohne darauf beschränkt zu sein. Eine besonders bevorzugte Schaltung eines Signalverstärkers ist die Ladungspumpe. Dem Fachmann sind entsprechende analoge Schaltungen für die aufgeführten Elemente bekannt. Für jede der elektrisch leitfähigen Verbindungen zu jeweils einer der elektrisch leitfähigen Flächen 4 existieren vorzugsweise gleichartige analoge Schaltungen, es können jedoch auch unterschiedliche Auslegungen der analogen Schaltung für die einzelnen Verbindungen zu den elektrisch leitfähigen Flächen existieren.

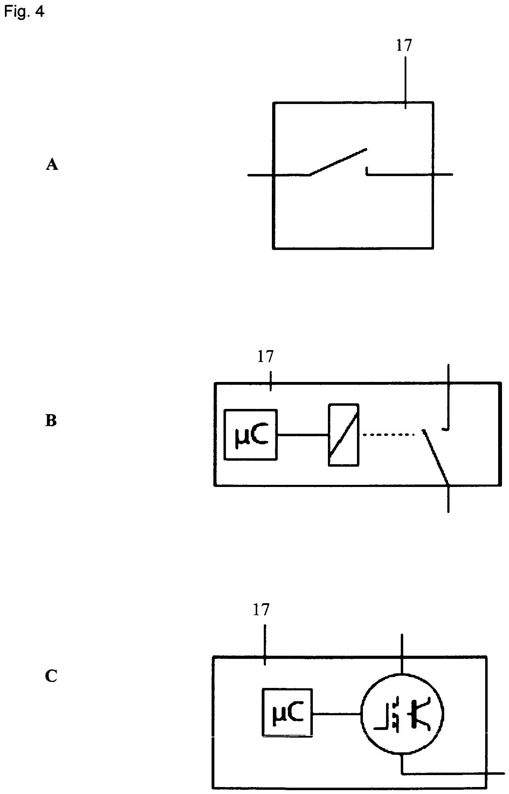

Fig. 4A-C zeigen digitale Schaltungen der Kontrolleinheit 17. Die digitale Schaltung 17 dient der Generierung der zu übertragenden Daten/Codes und der Umwandlung derer in digitale oder analoge Signale, die entweder direkt oder über die analoge Schaltung 18 über die elektrisch leitfähige Verbindung 5 an die elektrisch leitfähige Fläche 4 weitergeleitet werden. Besonders bevorzugt generiert die digitale Schaltung 17 mehrere elektrische Signale, die jeweils einzeln mit einer analogen Schaltung 18 oder direkt mit jeweils einer elektrisch leitfähigen Verbindung 5 an jeweils eine elektrisch leitfähige Fläche 4 weitergeleitet werden. Eine digitale Schaltung 17 ist vorzugsweise ein Mikrocontroller, kann aber auch ein ASIC, ein FPGA oder eine diskrete digitale Schaltung aus Logikgattern, Halbleiterbauelementen, elektromechanischen oder mechanischen Bauelementen oder eine Kombination davon sein.

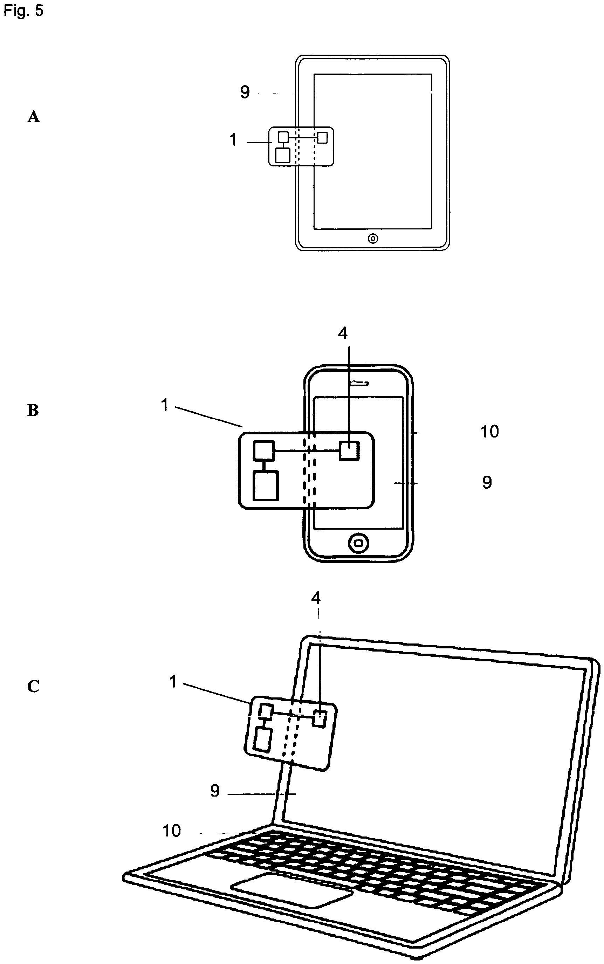

In der Fig. 5A-C ist eine Interaktion zwischen einem Eingabemittel 1 und einem Berührungsbildschirm 9 dargestellt. Das Eingabemittel 1 kann mit einem Berührungsbildschirm 9 interagieren. Der Berührungsbildschirm 9 ist vorzugsweise Bestandteil eines elektrischen Gerätes 10, umfassend Smartphones, Handys, Displays, Tablet-PCs, Notebooks, Touchpad-Geräte, Grafiktabletts, Fernseher, PDAs, MP3-Player und kapazitive Eingabegeräte. Ein Berührungsbildschirm 9 kann auch Bestandteil eines Eingabegerätes sein. Das Eingabemittel 1 wird mit dem Berührungsbildschirm 9 in Kontakt gebracht. Im Sinne der Erfindung kann dies bedeuten, dass das Eingabemittel 1 den Berührungsbildschirm 9 kontaktiert oder in dessen Nähe gebracht wird, sodass eine Wirkung auf dem Berührungsbildschirm 9 bzw. auf dem das den Berührungsbildschirm aufweisende Gerät 10 erzielt wird. Im Sinne der Erfindung bedeutet in Kontakt bringen, dass insbesondere zwischen dem Eingabemittel 1 und dem Berührungsbildschirm 9 bevorzugt kein Freiraum besteht. Das heißt, das Eingabemittel 1 ist bevorzugt mit dem Berührungsbildschirm 9 in Berührungskontakt. Es kann jedoch auch bevorzugt sein, dass zwischen dem Eingabemittel 1 und dem Berührungsbildschirm 9 kein direkter Kontakt besteht, sondern nur eine Annäherung vorliegt, welche ausreicht, um eine Eingabe auf dem Berührungsbildschirm 9 auszulösen. Bei einer Annäherung besteht zwischen Eingabemittel 1 und Berührungsbildschirm 9 ein bevorzugter Abstand von insbesondere 0 cm bis 2 cm.

Das Eingabemittel 1 kann in jeglicher Orientierung mit dem Berührungsbildschirm 9 interagieren. Es kann beispielsweise vollflächig auf den Berührungsbildschirm 9 aufgelegt werden oder lediglich partiell. Vorteilhafterweise wird es jedoch so mit dem Berührungsbildschirm 9 in Kontakt gebracht, dass mindestens eine elektrisch leitfähige Fläche 4 mit dem Berührungsbildschirm 9 in Kontakt ist. Der Berührungsbildschirm 9 kann auch Bestandteil eines Laptops oder Computers sein. Durch die Interaktion des Eingabemittels 1 mit dem Berührungsbildschirm 9 kann eine Dateneingabe erfolgen, die beispielsweise der Autorisierung oder Authentifizierung dient.

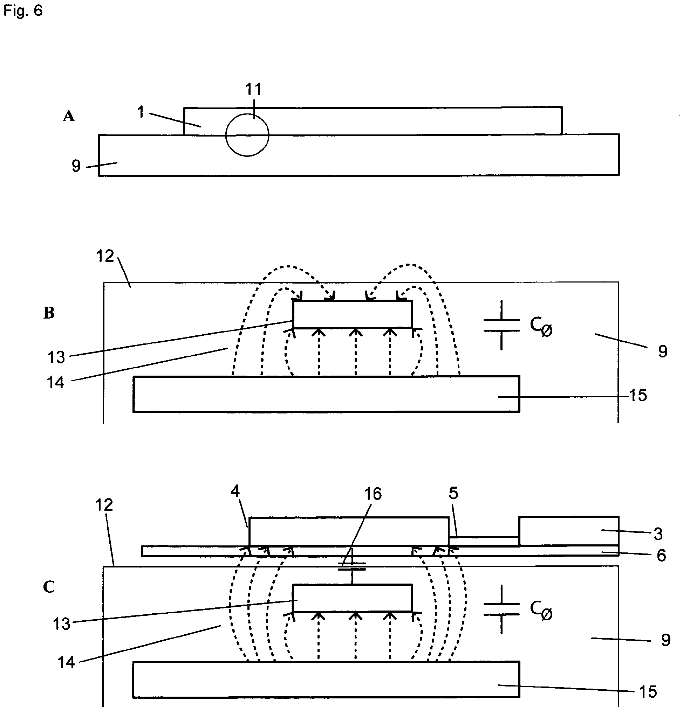

Fig. 6A-C zeigt eine Wirkverbindung zwischen einem Eingabemittel 1 und einem Berührungsbildschirm 9. Im Sinne der Erfindung bezeichnet eine Wirkverbindung 11 eine Verbindung zwischen dem Eingabeelement 1 und dem Berührungsbildschirm 9, sodass auf dem Berührungsbildschirm 9 eine Toucheingabe durch das Eingabemittel 1 generiert wird, die durch eine Auswerteeinheit des Berührungsbildschirms 9 und/oder das den Berührungsbildschirm aufweisende Geräte10 auswertbar ist. Wirkverbunden meint im einfachsten Sinne insbesondere, dass etwas miteinander mechanisch zumindest zeitweise verbunden ist. Weiterhin kann es - z.B. elektronisch - so verbunden sein, dass Energie und/oder Informationen übertragen werden (beispielsweise, ohne dass eine mechanische Verbindung vorliegt); d.h. zwei Elemente sind so angeordnet oder miteinander verknüpft, dass der gewünschte Effekt realisiert wird. Diese Wechselwirkung ist von der Wirkungsweise des Berührungsbildschirms 9 abhängig und kann durch verschiedene physikalische Wirkprinzipien oder Kombinationen derer erreicht werden, z.B. kapazitiv, induktiv, elektromagnetisch oder elektronisch. Fig. 6B zeigt exemplarisch eine Wirkungsweise eines kapazitiven Berührungsbildschirms 9. Hierbei bestehen elektrische Feldlinien 14 zwischen den Sensorleitungen 13 (oder Sensorelektroden) und den Treiberleitungen 15 (oder Treiberelektroden) des Berührungsbildschirms 9. Durch den Kontakt des Eingabemittels 1, genauer den elektrisch leitfähigen Flächen 4 des Eingabemittels 1 mit der Oberfläche des Berührungsbildschirms 12 kommt es zu einer Änderung der elektrischen Feldlinien 15 zwischen der Treiberleitung 15 und der Sensorleitung 13 und zur kapazitiven Kopplung 16. Die Beeinflussung der elektrischen Feldlinien 14 wird im Wesentlichen durch die elektrisch leitfähigen Flächen 4 des Eingabemittels 1 bewirkt. Weitere Elemente des Eingabemittels 1, wie Leiterbahnen 5 oder Kontrolleinheit 3 haben vorteilhafterweise keinen Effekt auf den Berührungsbildschirm 9, bzw. die elektrischen Feldlinien 14. Die Änderung der elektrischen Feldlinien 14 kann durch eine Auswerteeinheit des Berührungsbildschirms 9 und/oder das den Berührungsbildschirm aufweisende Geräte10 ausgewertet und verarbeitet werden.

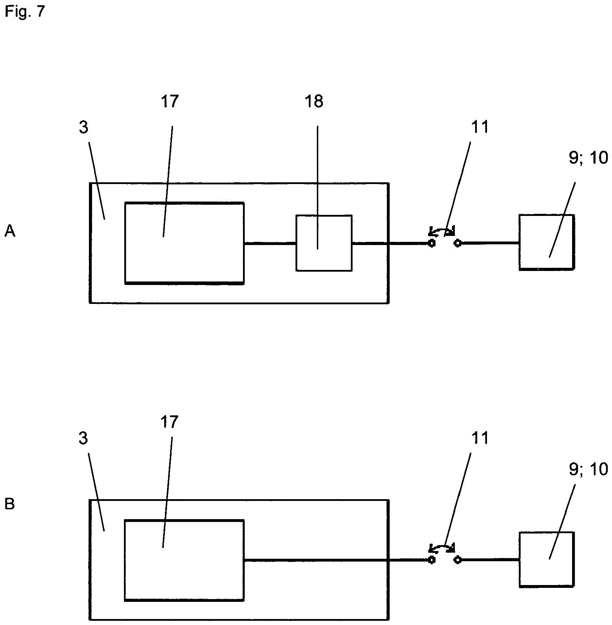

Fig. 7A,B stellen eine Prinzipdarstellung der funktionellen Verbindung der Kontrolleinheit 3, bestehend aus digitaler Schaltung 17 und/oder analoger Schaltung 18, Wirkverbindung 11 und Berührungsbildschirm 9 bzw. dem das Berührungsbildschirm aufweisende Gerät 10 dar. Die Kontrolleinheit 3 dient vorzugsweise der Generierung elektrischer Signale, die über die Leiterbahn 5 an die leifähige Fläche 4 geleitet werden. Über die Wirkverbindung 11 zwischen leitfähiger Fläche 4 und mindestens einer Sendeleitung 13 des Berührungsbildschirms 9 werden die elektrischen Signale an den Berührungsbildschirm 9 bzw. das den Berührungsbildschirm aufweisende Gerät 10 übertragen, der bzw. das die Signale als Toucheingaben interpretiert. Zur besseren Darstellung ist in dieser Ansicht auf die elektrisch leitfähige Fläche 4, das elektrisch nicht leitfähige Substrat, die Leiterbahn 5 und die Sendeleitung 13 verzichtet worden.

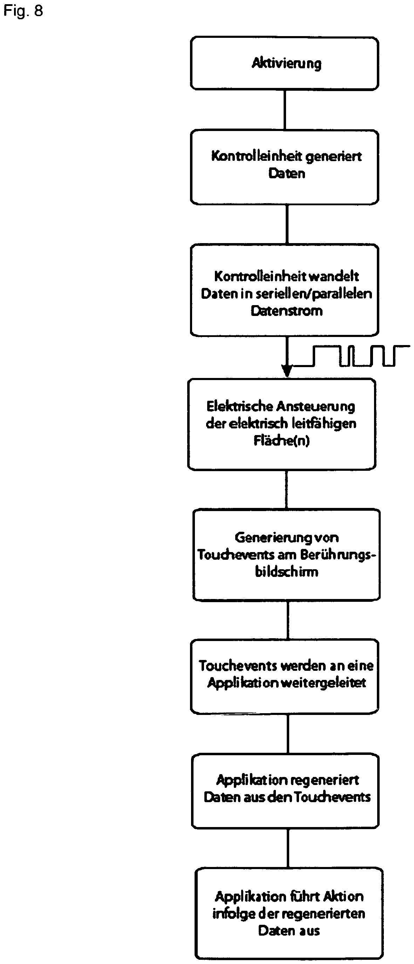

Fig. 8 zeigt ein Blockschaltbild einer Aktivierung des Eingabemittels 1. Sobald das Eingabemittel 1 durch einen Benutzer aktiviert ist, was beispielsweise durch das Drücken einer Taste 19 oder Schnappscheibe erfolgen kann, generiert die Kontrolleinheit 3 Daten. Die Kontrolleinheit 3 wird von der Energiequelle 2 mit Energie versorgt und kann somit autark arbeiten. Die Daten werden von der Kontrolleinheit 3 in einen seriellen oder parallelen Datenstrom umgewandelt, der wiederum als elektrischer Impuls über die Leiterbahnen 5 an die elektrisch leitfähigen Flächen 4 weitergeleitet wird. Diese stehen in Wirkkontakt mit einem Berührungsbildschirm 9 und generieren eine Toucheingabe auf dem Berührungsbildschirm 9. Die Toucheingabe beruht auf einer kapazitiven Kopplung 16, die von der Auswerteeinheit des Berührungsbildschirms oder des, den Berührungsbildschirm aufweisenden Gerätes 10 auswertbar ist. Hierdurch kann einfach und schnell eine Autorisierung oder Authentifizierung mittels des Eingabemittels 1 erfolgen. Das Eingabemittel 1 kann beispielsweise in eine Kreditkarte integriert sein und somit als Bezahlmittel oder weiteres Kontrollelement dienen.

### Bezugszeichenliste:

- 1: Eingabemittel
- 2: Energiequelle
- 3: Kontrolleinheit
- 4: leitfähige Fläche
- 5: Leiterbahn
- 6: elektrisch nicht leitfähiges Substrat
- 7: Decklage
- 8: Zwischenlage
- 9: Berührungsbildschirm
- 10: Berührungsbildschirm aufweisendes Gerät
- 11: Wirkverbindung zw. Berührungsbildschirm und Eingabemittel
- 12: Oberfläche des Berührungsbildschirms
- 13: Sensorleitung des Berührungsbildschirms
- 14: elektrische Feldlinien
- 15: Treiberleitung des Berührungsbildschirms
- 16: kapazitive Kopplung
- 17: digitale Schaltung der Kontrolleinheit
- 18: analoge Schaltung der Kontrolleinheit
- 19: Taster

## Patentansprüche

1. Eingabemittel, umfassend mindestens
a. ein elektrisch nicht leitfähiges Substrat,
b. eine auf dem Substrat vorliegende elektrisch leitfähige Fläche,
c. eine elektrische Leiterbahn
d. eine Kontrolleinheit zur elektrischen Verschaltung von Flächen gemäß b. und
e. eine Energiequelle,
**dadurch gekennzeichnet, dass**
mindestens eine elektrisch leitfähige Fläche über mindestens eine Leiterbahn mit der Kontrolleinheit elektrisch verbunden ist.

2. Eingabemittel nach Anspruch 1,
**dadurch gekennzeichnet, dass**
die Flächen einzeln, paarweise oder zu funktionellen Gruppen auf dem Substrat angeordnet sind.

3. Eingabemittel nach einem oder mehreren der vorherigen Ansprüche,
**dadurch gekennzeichnet, dass**
das Eingabemittel mindestens eine Schicht und/oder mindestens eine weitere Substratlage aufweist.

4. Eingabemittel nach einem oder mehreren der vorherigen Ansprüche,
**dadurch gekennzeichnet, dass**
die Kontrolleinheit mindestens eine digitale und/oder analoge Schaltung umfasst.

5. Eingabemittel nach einem oder mehreren der vorherigen Ansprüche,
**dadurch gekennzeichnet, dass**
die Digitalschaltung der Kontrolleinheit eine elektronische, elektromechanische oder mechanische Schaltung ist.

6. Eingabemittel nach einem oder mehreren der vorherigen Ansprüche,
**dadurch gekennzeichnet, dass**
die Energiequelle eine Batterie, ein Akkumulator, eine Solarzelle, ein Piezo-Element, ein Kondensator oder eine Kombination hiervon ist.

7. Eingabemittel nach einem oder mehreren der vorherigen Ansprüche,
**dadurch gekennzeichnet, dass**
das Eingabemittel mindestens eine Taste und/oder einen Schalter umfasst.

8. System umfassend ein Eingabemittel nach einem der Ansprüche 1 bis 7 und einen Berührungsbildschirm,
**dadurch gekennzeichnet, dass**
ein Berührungsbildschirm mit dem Eingabemittel wirkverbunden ist.

9. System nach Anspruch 8,
**dadurch gekennzeichnet, dass**
das Eingabemittel mit einer form-, kraft- und/oder stoffschlüssigen Verbindung mit dem Berührungsbildschirm verbunden ist.

10. System nach Anspruch 8 oder 9,
**dadurch gekennzeichnet, dass**
der Berührungsbildschirm über visuelle, akustische, taktile, haptische oder mechanische Positionierungsmittel verfügt.

11. Verfahren zur Eingabe von Daten an einem Berührungsbildschirm umfassend
a. ein Eingabemittel umfassend mindestens
i. ein elektrisch nicht leitfähiges Substrat,
ii. eine auf dem Substrat vorliegende elektrisch leitfähige Fläche,
iii. eine elektrische Leiterbahn,
iv. eine Kontrolleinheit und
v. eine Energiequelle,
wobei mindestens eine elektrisch leitfähige Fläche über mindestens eine Leiterbahn mit der Kontrolleinheit elektrisch verbunden ist
b. und einen Berührungsbildschirm,
wobei das Eingabemittel mit dem Berührungsbildschirm wirkverbunden wird und die Flächen elektrisch aktiviert werden, wodurch eine kapazitive Einkopplung von Eingabemittel zum Berührungsbildschirm erreicht wird und eine Dateneingabe auf dem Berührungsbildschirm erzielt wird.

12. Verfahren nach Anspruch 11, wobei die eingegebenen Daten zufällig erzeugte oder determinierte Daten sind.

13. Verfahren nach Anspruch 11 oder 12, wobei die Dateneingabe auf dem Berührungsbildschirm statisch und/oder dynamisch erfolgt.

14. Verwendung eines Eingabemittels nach den Ansprüchen 1 bis 7 zur Authentifizierung, Autorisierung und/oder Dateneingabe.

15. Verwendung nach Anspruch 14, wobei ein Einmalpasswort, Passwort oder Code generiert wird.

16. Verwendung des Eingabemittels nach Anspruch 14 oder 15, wobei das Eingabemittel eine Karte zur Zahlung von Waren und Dienstleistungen ist oder in eine solche integriert ist.

17. Verwendung nach einem oder mehreren der vorherigen Ansprüche für Anwendungen ausgewählt aus der Gruppe umfassend Spielkarten, Sammelkarten, Briefmarken, Frankierung, Porto, Warenlogistik, Warenverfolgung, digitale Ordnungssysteme, Katalogisierung, digitalem Karteikartensystem, Einlass, Eintrittskarten, Zugang zu geschlossen Bereichen, virtuellen Inhalten, Marketinganwendungen, Kundenbindung, Lotterie- und Gewinnspiele, Mitgliederausweise, Zeitkarten, Bezahlanwendungen, Echtheits-Zertifikate, Zertifikate, Fälschungssicherungen, Kopierschutze, Signaturen, Lieferscheine, Kontoauszüge, Beipackzettel, Gegenstände innerhalb von Computerspielen, Music/Video/E-Books-Downloads, Bonusmarken/-programme, Gerätesteuerungen oder Geschenkkarten.
